# EUROPEAN PATENT SPECIFICATION

(11) **EP 4 324 861 B1**
(45) Date of publication and mention of the grant of the patent: **30.09.2026**
(21) Application number: 22788105.9
(22) Date of filing: 06.04.2022
(51) Int. Cl.: C08F 214/26, C08K 5/17, C08L 27/18, C08F 14/26, C08J 3/24, C08K 3/04, C08K 5/00, C08K 5/18

(54) **FLUORINATED COPOLYMER, METHOD FOR PRODUCING FLUORINATED COPOLYMER, FLUORINATED COPOLYMER COMPOSITION AND CROSS-LINKED RUBBER ARTICLE**
FLUORIERTES COPOLYMER, VERFAHREN ZUR HERSTELLUNG EINES FLUORIERTEN COPOLYMERS, ZUSAMMENSETZUNG AUS EINEM FLUORIERTEN COPOLYMER UND VERNETZTER KAUTSCHUKARTIKEL
COPOLYMÈRE FLUORÉ, PROCÉDÉ DE PRODUCTION D'UN COPOLYMÈRE FLUORÉ, COMPOSITION DE COPOLYMÈRE FLUORÉ ET ARTICLE EN CAOUTCHOUC RÉTICULÉ

(30) Priority: 12.04.2021 JP 2021066993
(43) Date of publication of application: 21.02.2024
(73) Proprietor: AGC INC., Chiyoda-ku Tokyo 100-8405 (JP)
(72) Inventor: HATTORI, Yukiko, Tokyo 100-8405 (JP); KAWAI, Tsuyoshi, Tokyo 100-8405 (JP)
(74) Representative: Müller-Boré & Partner Patentanwälte PartG mbB
(86) International application number: PCT/JP2022/017143
(87) International publication number: WO 2022/220180

(56) References cited:
- EP-A1- 4 053 176
- WO-A1-2020/114972
- WO-A1-2020/114972
- WO-A1-2021/085423
- JP-A- 2008 031 195
- JP-A- 2008 031 195
- JP-A- 2009 529 070
- JP-A- 2019 500 469
- JP-A- H11 510 495

## Description

### TECHNICAL FIELD

The present invention relates to a fluorinated copolymer, a method for producing a fluorinated copolymer, a fluorinated copolymer compositions, and a cross-linked rubber article.

### BACKGROUND ART

Cross-linked rubber articles obtainable by cross-linking fluorinated copolymers are excellent in heat resistance, chemical resistance, oil resistance and weather resistance and thus are used in diverse environments.

As fluorinated copolymers to be used to obtain such cross-linked rubber articles, Patent Document 1 discloses fluorinated copolymers having units based on tetrafluoroethylene, units based on a perfluoro(alkyl vinyl ether) and units based on a monomer having nitrile groups (cyano groups). Patent Document 2 discloses the preparation of articles by moulding from fluoroelastomers that comprise units derived from TFE, a perfluorovinyl ether and a fluorinated monomer bearing a nitrile group.

### PRIOR ART DOCUMENT

### PATENT DOCUMENT

Patent Document 1: JP-A-H6-263952
Patent Document 2: WO 2020114972 A1

### DISCLOSURE OF INVENTION

### TECHNICAL PROBLEM

A cross-linked rubber article is produced, for example, by supplying a fluorinated copolymer to a mold and heat molding it. When the present inventors have produced cross-linked rubber articles by using the fluorinated copolymer disclosed in Patent Document 1, they have found that there was room for improvement in the mold-releasing properties of the cross-linked rubber articles from the mold.

The present invention has been made in view of the above problem and is concerned with providing a fluorinated copolymer capable of producing a cross-linked rubber article excellent in mold-releasing properties, a method for producing the fluorinated copolymer, a fluorinated copolymer composition and a cross-linked rubber article.

### SOLUTION TO THE PROBLEM

The present inventors have studied the above problem and, as a result, have found that by using a fluorinated copolymer having units based on tetrafluoroethylene, units based on a perfluoro(alkyl vinyl ether), units based on a monomer having a fluorine atom and at least two polymerizable unsaturated bonds, and units based on a monomer having a nitrile group and a fluorine atom, wherein G'_{0.3}/G'_{0.03} is within a specific range, it is possible to obtain a cross-linked rubber article excellent in mold-releasing properties, and thus have arrived at the present invention.

That is, the present inventors have found that the above problem can be solved by the following constructions.
[1] A fluorinated copolymer having units based on tetrafluoroethylene, units based on a perfluoro(alkyl vinyl ether), 0.03 to 0.20 mol%, based on the copolymer, of units based on a monomer having a fluorine atom and at least two polymerizable unsaturated bonds, and units based on a monomer having a nitrile group and a fluorine atom, wherein
   when the storage modulus of said fluorinated copolymer at an angular frequency of 0.3 rad/s is G'_{0.3} and the storage modulus of said fluorinated copolymer at an angular frequency of 0.03 rad/s is G'_{0.03}, as determined by dynamic viscoelasticity measurement at 140°C, G'_{0.3}/G'_{0.03} is from 1.00 to 1.43
[2] The fluorinated copolymer according to [1], wherein the molar ratio of the content of the units based on a monomer having a fluorine atom and at least two polymerizable unsaturated bonds to the content of the units based on a monomer having a nitrile group and a fluorine atom is from 0.002 to 7.
[3] The fluorinated copolymer according to [1] or [2], wherein said perfluoro(alkyl vinyl ether) is a monomer represented by the following formula (1):

   CF₂=CF-O-R^{f1} (1)

   in the formula (1), R^{f1} represents a C₁₋₁₀ perfluoroalkyl group.
[4] The fluorinated copolymer according to any one of [1] to [3], wherein the monomer having a fluorine atom and at least two polymerizable unsaturated bonds is a monomer represented by the following formula (2):

   (CR²¹R²²=CR²³-)ₐ₁R²⁴ (2)

   in the formula (2), R²¹, R²² and R²³ each independently represent a hydrogen atom, a fluorine atom, a methyl group or a trifluoromethyl group, a1 represents an integer of from 2 to 6, and R²⁴ represents an a1-valent C₁₋₁₀ perfluorohydrocarbon group, or a group having an etheric oxygen atom at a terminal or between carbon-carbon bonds of the perfluorohydrocarbon group, and the plurality of R²¹, the plurality of R²² and the plurality of R²³ may, respectively, be the same or different from each other.
[5] The fluorinated copolymer according to [4], wherein the monomer represented by the formula (2) is a monomer represented by the following formula (3), or a monomer represented by the following formula (4):

   (CF₂=CF-)₂R³¹ (3)

   in the formula (3), R³¹ represents a divalent C₁₋₁₀ perfluorohydrocarbon group, or a group having an etheric oxygen atom at a terminal or between carbon-carbon bonds of the perfluorohydrocarbon group;

   (CH₂=CH-)₂R⁴¹ (4)

   in the formula (4), R⁴¹ represents a divalent C₁₋₁₀ perfluorohydrocarbon group, or a group having an etheric oxygen atom at a terminal or between carbon-carbon bonds of the perfluorohydrocarbon group.
[6] The fluorinated copolymer according to any one of [1] to [5], wherein the monomer having a nitrile group and a fluorine atom is a monomer represented by the following formula (5):

   CR⁵¹R⁵²=CR⁵³-R⁵⁴-CN (5)

   in the formula (5), R⁵¹, R⁵² and R⁵³ each independently represent a hydrogen atom, a fluorine atom or a methyl group, and R⁵⁴ represents a divalent C₁₋₁₀ perfluorohydrocarbon group, or a group having an etheric oxygen atom at a terminal or between carbon-carbon bonds of the perfluorohydrocarbon group.
[7] The fluorinated copolymer according to [6], wherein all of said R⁵¹, R⁵² and R⁵³ are fluorine atoms or all of them are hydrogen atoms, and wherein R⁵⁴ has an etheric oxygen atom and the number of etheric oxygen atoms is from 1 to 3.
[8] The fluorinated copolymer according to any one of [1] to [7], which does not substantially contain iodine atoms.
[9] A method for producing a fluorinated copolymer as defined in any one of [1] to [8], which comprises copolymerizing tetrafluoroethylene, a perfluoro(alkyl vinyl ether), a monomer having a fluorine atom and at least two polymerizable unsaturated bonds, and a monomer having a nitrile group and a fluorine atom in the presence of a radical polymerization initiator.
[10] The method for producing a fluorinated copolymer according to [9], wherein the copolymerization is conducted in the absence of a chain transfer agent containing iodine atoms.
[11] A fluorinated copolymer composition comprising a fluorinated copolymer as defined in any one of [1] to [8], and a crosslinking agent.
[12] The fluorinated copolymer composition according to [11], wherein the crosslinking agent is a compound having at least two amino groups.
[13] The fluorinated copolymer composition according to [11] or [12], wherein the content of the crosslinking agent is less than 1.0 part by mass to 100 parts by mass of the fluorinated copolymer.
[14] A cross-linked rubber article, having the fluorinated copolymer in the fluorinated copolymer composition as defined in any one of [11] to [13] cross-linked.

### ADVANTAGEOUS EFFECTS OF INVENTION

According to the present invention, it is possible to provide a fluorinated copolymer capable of producing a cross-linked rubber article excellent in mold-releasing properties, a method for producing the fluorinated copolymer, a fluorinated copolymer composition, and a cross-linked rubber article.

### DESCRIPTION OF EMBODIMENTS

The meanings of the terms in the present invention are as follows.

A "unit" is a generic term for an atomic group derived from a single molecule of a monomer directly formed by polymerization of the monomer, and an atomic group obtainable by chemical conversion of a portion of the above atomic group. "Units based on a monomer" may hereinafter be simply referred to as "units".

A "rubber" means a rubber that exhibits properties defined by JIS K6200 (2008) and is distinguished from a "resin".

### [Fluorinated copolymer]

The fluorinated copolymer of the present invention has units based on tetrafluoroethylene (hereinafter referred to also as "TFE"), units based on a perfluoro(alkyl vinyl ether) (hereinafter referred to also as "PAVE"), units based on a monomer having a fluorine atom and at least two unsaturated polymerizable bonds (hereinafter referred to also as "monomer A"), and units based on a monomer having a nitrile group and a fluorine atom (hereinafter referred to also as "R_{CN}").

Further, in the fluorinated copolymer of the present invention, when the storage modulus of the above fluorinated copolymer at an angular frequency of 0.3 rad/s, is G'_{0.3} and the storage modulus of the above fluorinated copolymer at an angular frequency of 0.03 rad/s, is G'_{0.03}, as determined by dynamic viscoelasticity measurement at 140°C, G'_{0.3}/ G'_{0.03} is from 1.00 to 1.43**.**

The cross-linked rubber article obtained by using the fluorinated copolymer of the present invention is excellent in mold-releasing properties from the mold. The details of the reason for this have not been clarified, but it is assumed to be due to the following reason.

The fluorinated copolymer of the present invention has monomer A units and R_{CN} units. The monomer A units in the fluorinated copolymer constitute branching structures in a cross-linked rubber article obtainable by using the fluorinated copolymer. Therefore, when the monomer A units are sufficiently introduced into the fluorinated copolymer, the cross-linked rubber article obtainable by using the fluorinated copolymer becomes rigid. Further, the nitrile group in the R_{CN} unit is a cross-linking group, and the cross-linked rubber article obtained by cross-linking the fluorinated copolymer having the monomer A units and the R_{CN} units becomes more rigid. The rigid cross-linked rubber article is considered to be easier to detach from the mold because the cross-linked rubber is less likely to follow the mold when the cross-linked rubber article is detached from the mold.

In particular, it is presumed that in the fluorinated copolymer of the present invention, the branching structures and cross-linked sites are uniformly distributed throughout the fluorinated copolymer, as compared to a fluorinated copolymer in which monomer A and R_{CN} are not used together. In a case where a gaseous monomer and a liquid monomer are to be polymerized, the transfer of the liquid monomer to the reaction field is considered to be the rate-limiting factor of the reaction. Although the detailed mechanism is not known, it is thought that in a case where monomer A and R_{CN} are used together, the migration of monomer A and R_{CN} into the reaction field is accelerated, as compared to a case where monomer A is used alone or a case where R_{CN} is used alone. Therefore, it is considered that the mold-releasing properties are improved due to the increase in hardness in the microscopic part of the cross-linked rubber article, where no difference can be found from the physical property values such as general rubber hardness.

Here, it is difficult to introduce all monomer A charged during the polymerization of the fluorinated copolymer into the fluorinated copolymer. It is also difficult to measure the extent to which monomer A units are contained in the fluorinated copolymer.

In response to this problem, the present inventors have focused on the ratio of the storage modulus measured under conditions of large angular frequency (specifically, G'_{0.3}) to the storage modulus measured under conditions of small angular frequency (specifically, G'_{0.03}), i.e. G'_{0.3}/G'_{0.03}, as an index showing the degree of the presence of branched structures in the fluorinated copolymer. It can be said that the closer G'_{0.3}/G'_{0.03} to 1.00, the more branched structures are present in the fluorinated copolymer. The reason for this is that the more branched structures are contained, the shorter the relaxation time during storage modulus measurement, the smaller the difference in storage modulus depending on the shear rate, and the closer G'_{0.3}/G'_{0.03} becomes to 1.00.

For this reason, the mold-releasing properties of the cross-linked rubber article are considered to have been improved when a fluorinated copolymer with G'_{0.3}/G'_{0.03} within the above range is used.

Thus, it is assumed that the cross-linked rubber article excellent in mold-releasing properties was obtained by the synergistic effects of having monomer A units and R_{CN} units and bringing G'_{0.3}/G'_{0.03} within the above range.

PAVE units are units based on a perfluoro(alkyl vinyl ether).

PAVE is preferably a monomer represented by the formula (1), since it is excellent in polymerization reactivity and rubber properties.

CF₂=CF-O-R^{f1} (1)

In the formula (1), R^{f1} represents a C₁₋₁₀ perfluoroalkyl group. The number of carbon atoms in R^{f1} is preferably from 1 to 8, more preferably from 1 to 6, further preferably from 1 to 5, particularly preferably from 1 to 3, from such a viewpoint that the polymerization reactivity will be more excellent.

The perfluoroalkyl group may be linear or branched.

As specific examples of PAVE, perfluoro(methyl vinyl ether) (hereinafter referred to also as "PMVE"), perfluoro(ethyl vinyl ether) (hereinafter referred to also as "PEVE") and perfluoro(propyl vinyl ether) (hereinafter referred to also as "PPVE") may be mentioned, and among them, PMVE and PPVE are preferred.

Monomer A units are units based on a monomer having a fluorine atom and at least two polymerizable unsaturated bonds.

As specific examples of the polymerizable unsaturated bonds, carbon atom-carbon atom double bonds (C=C) and carbon atom-carbon atom triple bonds (C≡ C) may be mentioned.

The number of polymerizable unsaturated bonds in monomer A is preferably from 2 to 6, more preferably 2 or 3, particularly preferably 2, from such a viewpoint that the polymerization reactivity will be more excellent.

Monomer A units preferably do not have nitrile groups.

Monomer A is preferably a monomer represented by the formula (2) from such a viewpoint that the mold-releasing properties of the cross-linked rubber article will be more excellent.

(CR²¹R²²=CR²³-)ₐ₁R²⁴ (2)

In the formula (2), R²¹, R²² and R²³ each independently represent a hydrogen atom, a fluorine atom, a methyl group or a trifluoromethyl group, a1 represents an integer of from 2 to 6, and R²⁴ represents an a1-valent C₁₋₁₀ perfluorohydrocarbon group, or a group having an etheric oxygen atom at a terminal or between carbon -carbon bonds of the perfluorohydrocarbon group. The plurality of R²¹, the plurality of R²² and the plurality of R²³ may, respectively, be the same or different from each other, and are particularly preferably the same to each other.

As a1, 2 or 3 is preferred, and 2 is particularly preferred.

From such a viewpoint that the polymerization reactivity of monomer A is more excellent, R²¹, R²² and R²³ are preferably fluorine atoms or hydrogen atoms; it is more preferably that all of R²¹, R²² and R²³ are fluorine atoms or all of them are hydrogen atoms, and from such a viewpoint that the mold-releasing properties of the cross-linked rubber article will be more excellent, it is particularly preferred that all of R²¹, R²² and R²³ are fluorine atoms.

R²⁴ may be linear, branched or cyclic, and is preferably linear or branched, particularly preferably linear. The number of carbon atoms in R²⁴ is preferably from 2 to 8, more preferably from 3 to 7, further preferably from 3 to 6, particularly preferably from 3 to 5.

R²⁴ may or may not have an etheric oxygen atom, but from such a viewpoint that the crosslinking reactivity and rubber properties will be more excellent, it is preferred to have an etheric oxygen atom.

The number of etheric oxygen atoms in R²⁴ is preferably from 1 to 6, more preferably from 1 to 3, particularly preferably 1 or 2. The etheric oxygen atom in R²⁴ is preferably present at a terminal of R²⁴.

Among monomers represented by the formula (2), as specific examples of the suitable monomer, a monomer represented by the formula (3) and a monomer represented by the formula (4) may be mentioned.

(CF₂=CF-)₂R³¹ (3)

In the formula (3), R³¹ represents a divalent C₁₋₁₀ perfluorohydrocarbon group, or a group having an etheric oxygen atom at a terminal or between carbon-carbon bonds of the perfluorohydrocarbon group.

(CH₂=CH-)₂R⁴¹ (4)

In the formula (4), R⁴¹ represents a divalent C₁₋₁₀ perfluorohydrocarbon group, or a group having an etheric oxygen atom at a terminal or between carbon-carbon bonds of the perfluorohydrocarbon group.

As specific examples of the monomer represented by the formula (3), CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₃OCF=CF₂, CF₂=CFO(CF₂)₃OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂ and CF₂=CFOCF₂CF₂O(CF₂O)₂CF₂CF₂OCF=CF₂ may be mentioned.

Among monomers represented by the formula (3), as specific examples of more suitable, CF₂=CFO(CF₂)₃OCF=CF₂ (hereinafter referred to also as "C3DVE") and CF₂=CFO(CF₂)₄OCF=CF₂ (hereinafter referred to also as "C4DVE") may be mentioned.

As specific examples of the monomer represented by the formula (4), CH₂=CH(CF₂)₂CH=CH₂, CH₂=CH(CF₂)₄CH=CH₂ and CH₂=CH(CF₂)₆CH=CH₂ may be mentioned.

Among monomers represented by the formula (4), as a specific example of more suitable monomer, CH₂=CH(CF₂)₆CH=CH₂ (hereinafter referred to also as "C6DV") may be mentioned.

When the monomer A is copolymerized, the polymerizable double bond present at a terminal of the monomer A reacts during the polymerization, whereby a fluorinated copolymer having a branched chain is obtainable.

R_{CN} units are units based on a monomer having a nitrile group and a fluorine atom. As the fluorinated copolymer has R_{CN} units, the heat resistance of the cross-linked rubber article will be excellent.

R_{CN} preferably has a polymerizable unsaturated bond from the viewpoint of polymerization reactivity, and it is particularly preferred to have one polymerizable unsaturated bond. Specific examples of the polymerizable unsaturated bond are as described above.

R_{CN} is preferably a monomer represented by the following formula (5) from such a viewpoint that the mold-releasing properties and heat resistance of the cross-linked rubber article will be more excellent.

CR⁵¹R⁵²=CR⁵³-R⁵⁴-CN (5)

In the formula (5), R⁵¹, R⁵² and R⁵³ each independently represent a hydrogen atom, a fluorine atom or a methyl group, and R⁵⁴ represents a divalent C₁₋₁₀ perfluorohydrocarbon group, or a group having an etheric oxygen atom at a terminal or between carbon-carbon bonds of said perfluorohydrocarbon group.

From such a viewpoint that the polymerization reactivity of R_{CN} will be excellent, R⁵¹, R⁵² and R⁵³ are preferably fluorine atoms or hydrogen atoms, and all of R⁵¹, R⁵² and R⁵³ are preferably fluorine atoms, or all of them are preferably hydrogen atoms, and from such a viewpoint that the mold-releasing properties and heat resistance of the cross-linked rubber article will be more excellent, it is particularly preferred that all of R⁵¹, R⁵² and R⁵³ are fluorine atoms.

R⁵⁴ may be linear, branched or cyclic, and is preferably linear or branched. The number of carbon atoms in R⁵⁴ is preferably from 2 to 8, more preferably from 3 to 7, further preferably from 3 to 6, particularly preferably from 3 to 5.

R⁵⁴ may have or may not have an etheric oxygen atom, but from such a viewpoint that the rubber properties will be more excellent, it is preferred to have an etheric oxygen atom.

The number of etheric oxygen atoms in R⁵⁴ is preferably from 1 to 3, particularly preferably 1 or 2.

As specific examples of the monomer represented by the formula (5), CF₂=CFOCF₂CF(CF₃)OCF₂CF₂CN (hereinafter referred to also as "8CNVE"), CF₂=CFO(CF₂)₅CN (hereinafter referred to also as "MV5CN"), CF₂=CFOCF₂CF₂CF₂OCF(CF₃)CN and CF₂= CFO(CF₂)₃CN may be mentioned, and from such a viewpoint that the mold-releasing properties and heat resistance of the cross-linked rubber article will be more excellent, 8CNVE and MV5CN are preferred.

The fluorinated copolymer may have units based on monomers other than TFE, PAVE, monomer A and R_{CN}. Hereinafter, there may be a case where monomers other than TFE, PAVE, monomer A and R_{CN} may be collectively referred to as "other monomers".

As specific examples of other monomers, a monomer represented by the following formula (6), vinylidene fluoride (hereinafter referred to also as "VdF"), hexafluoropropylene (hereinafter referred to also as "HFP"), chlorotrifluoroethylene (hereinafter referred to also as "CTFE"), ethylene, and monomers having halogen atoms, other than TFE, PAVE, monomer A, R_{CN}, the monomer represented by the formula (6), VdF, HFP and CTFE (hereinafter referred to also as "other monomers having halogen atoms") (e.g. bromotrifluoroethylene and iodotrifluoroethylene) may be mentioned.

The formula (6) is as follows.

CF₂= CF-O-R^{f2} (6)

In the formula (6), R^{f2} represents a C₁₋₈ perfluoroalkyl group containing from 1 to 5 etheric oxygen atoms. The number of carbon atoms in R^{f2} is preferably from 1 to 6, particularly preferably from 1 to 5.

As specific examples of the monomer represented by the formula (6), perfluoro(3,6-dioxa-1-heptene), perfluoro(3,6-dioxa-1-octene) and perfluoro(5-methyl-3,6-dioxa-1-nonene) may be mentioned.

The content of TFE units is preferably from 60 to 79 mol%, more preferably from 63 to 75 mol%, particularly preferably from 66 to 72 mol%, to all units of the fluorinated copolymer, from such a viewpoint that the heat resistance of the cross-linked rubber article will be more excellent.

The content of PAVE units is preferably from 20 to 39 mol%, more preferably from 24 to 36 mol%, particularly preferably from 27 to 33 mol%, to all units of the fluorinated copolymer, from such a viewpoint that the elasticity of the cross-linked rubber article will be more excellent.

The content of the monomer A units is from 0.03 to 0.20 mol%, preferably from 0.03 to 0.15 mol%, particularly preferably from 0.06 to 0.13 mol%, to all units of the fluorinated copolymer, from such a viewpoint that it will be easier to adjust G'_{0.3}/G'_{0.03} within the above mentioned range, and the mold-releasing properties, physical properties and appearance of the cross-linked rubber article will be more excellent.

The content of R_{CN} units is preferably from 0.05 to 5 mol%, more preferably from 0.1 to 3 mol%, further preferably from 0.2 to 1.5 mol%, particularly preferably from 0.4 to 0.8 mol%, to all units of the fluorinated copolymer, from such a viewpoint that the mold-releasing properties and heat resistance of the cross-linked rubber article will be more excellent.

When TFE units, PAVE units, monomer A units and R_{CN} units are within the above ranges, it is easy to adjust G'_{0.3}/G'_{0.03} within the above range.

When the fluorinated copolymer contains other monomer units, the content of other monomer units is preferably from 0.01 to 20 mol%, more preferably from 0.5 to 10 mol%, particularly preferably from 1 to 5 mol%, to all units of the fluorinated copolymer, from the viewpoint of the heat resistance of the cross-linked rubber article.

The molar ratio of the content of monomer A units to the content of R_{CN} units (monomer A units/R_{CN} units) is preferably from 0.002 to 7, more preferably from 0.01 to 2, further preferably from 0.02 to 0.75, particularly preferably from 0.075 to 0.43, most preferably from 0.09 to 0.30. When the molar ratio is within the above range, both mold-releasing properties and heat resistance of the cross-linked rubber article can be achieved at a high level, and the appearance will also be excellent.

Here, the monomer A units to all units in the fluorinated copolymer are calculated based on the amount of monomer A used in the production of the fluorinated copolymer (amount of monomer A used). Here, the "amount of monomer A used" is the value obtained by subtracting the amount of monomer A that was not polymerized from the amount of monomer A added to the polymerization vessel (amount of monomer A charged). Monomer A that was not polymerized is considered to be contained in the filtrate after agglomerating the latex after polymerization and taking out the fluorinated copolymer and in the filtrate remaining after washing the latex, and its amount can be measured by measuring fluoride ions, for example, by an ion chromatograph measuring device.

Further, TFE units, PAVE units and R_{CN} units to all units in the fluorinated copolymer are calculated by ¹⁹F-nuclear magnetic resonance (NMR) analysis. Specifically, by ¹⁹F-nuclear magnetic resonance (NMR) analysis, TFE units: PAVE units: R_{CN} units (molar ratios) in the fluorinated copolymer are obtained. Then, the contents of the respective units are obtained by applying the TFE units: PAVE units: R_{CN} units (molar ratios) in the fluorinated copolymer obtained by ¹⁹F-nuclear magnetic resonance (NMR) analysis to a value having the content (mol%) of the monomer A units subtracted from 100 mol%.

The fluorinated copolymer preferably does not substantially contain iodine atoms.

When the fluorinated copolymer does not substantially contain iodine atoms, the crosslinking properties of the fluorinated copolymer will be excellent, and the cross-linked article obtainable by using it is less likely to crack, and the compression set rate at high temperatures can be reduced. Since iodine atoms in the fluorinated copolymer can serve as crosslinking points, it seems that the inclusion of iodine atoms has better crosslinking properties. However, if the fluorinated copolymer having a nitrile group as a crosslinking point contains an iodine atom, the crosslinking agent in the fluorinated copolymer composition will preferentially react with the iodine atom rather than the nitrile group. If the content of iodine atoms in the fluorinated copolymer is small, the nitrile group and the crosslinking agent can react sufficiently. Further, the crosslinked structure formed by the reaction between the nitrile group of the fluorinated copolymer and the crosslinking agent has excellent heat resistance. Therefore, if a fluorinated copolymer composition containing a fluorinated copolymer that does not substantially contain iodine atoms is used, it is possible to form a cross-linked article with excellent crosslinking properties, less cracking, and a small compression set rate at high temperatures. In particular, if a chain transfer agent containing iodine atoms (as described later) is not used in the production of the fluorinated copolymer, the obtainable fluorinated copolymer has a wider molecular weight distribution and a better balance between hardness and elongation, resulting in excellent mechanical properties (e.g. tensile strength). Further, since the molecular weight distribution of the fluorinated copolymer becomes wide, the number of relatively low molecular weight fluorinated copolymer will increase, whereby it will be easier to adjust G'_{0.3}/G'_{0.03} within the above-mentioned range.

Here, "the fluorinated copolymer does not substantially contain iodine atoms" means that the content of iodine atoms is at most 0.09 mass%, preferably at most 0.05 mass%, more preferably at most 0.02 mass%, particularly preferably 0 mass% (i.e. does not contain iodine atoms).

As the iodine atoms, iodine atoms derived from iodine compounds that function as chain transfer agents, and iodine atoms in units based on monomers having iodine atoms among other halogen atom-containing monomers such as the above-mentioned iodotrifluoroethylene.

As specific examples of iodine compounds that function as chain transfer agents, 1,3-diiodopropane, 1,4-diiodobutane (hereinafter referred to also as "DIB"), 1,6-diiodohexane, 1,8-diiodooctane, 1,3-diiodoperfluoropropane, 1,4-diiodoperfluorobutane, 1,6-diiodoperfluorohexane and 1,8-diiodoperfluorooctane may be mentioned.

### <Physical properties of fluorinated copolymer>

G'_{0.3}/G'_{0.03} of the fluorinated copolymer is from 1.00 to 1.43 and from such a viewpoint that the mold-releasing properties of the cross-linked rubber article will be more excellent, from 1.20 to 1.43 is preferred, from 1.30 to 1.43 is further preferred, and from 1.40 to 1.43 is most preferred.

The higher the angular frequency at the time of the measurement, the larger the value of the storage modulus, and therefore, the value of G'_{0.3}/G'_{0.03} will not be less than 1.00.

G'_{0.3} of the fluorinated copolymer is, from the viewpoint of molding workability, preferably from 600 to 800 kPa, more preferably from 650 to 750 kPa, particularly preferably from 670 to 700 kPa.

G'_{0.03} of the fluorinated copolymer is, from the viewpoint of molding workability, preferably from 400 to 600 kPa, more preferably from 430 to 550 kPa, particularly preferably from 470 to 500 kPa.

Here, G'_{0.3} means the storage modulus of the fluorinated copolymer at an angular frequency of 0.03 rad/s, as determined by dynamic viscoelasticity measurement at 140°C. Further, G'_{0.03} means the storage modulus measured under a condition of an angular frequency of 0.03 rad/s, as determined by dynamic viscoelasticity measurement at 140°C. Here, "rad/s" means radians per second.

G'_{0.3} and G'_{0.03} of the fluorinated copolymer in the present invention are values measured in accordance with ASTM D6204 by using a rubber processing analysis device, and detailed measurement conditions are as shown in Examples.

Further, by multiplying the value of G'_{0.3}/G'_{0.03} of the fluorinated copolymer by 0.92, it can be converted to G'₁/G'_{0.1} of the fluorinated copolymer.

Here, G'_{0.1} means the storage modulus measured under a condition of an angular frequency of 0.1 rad/s, as determined by dynamic viscoelasticity measurement at 140°C. Further, G'₁ means the storage modulus measured under a condition of an angular frequency of 1 rad/s, as determined by dynamic viscoelasticity measurement at 140°C.

### <Method for producing fluorinated copolymer>

The present invention is also a method for producing said fluorinated copolymer.

That is, the method for producing a fluorinated copolymer of the present invention is a method of copolymerizing TFE, PAVE, monomer A and R_{CN} in the presence of a radical polymerization initiator.

As the method of producing a fluorinated copolymer of the present invention, it is preferably a method of copolymerizing the above-mentioned monomers in the presence of a radical polymerization initiator and in the absence of a chain transfer agent containing an iodine atom. The effect of polymerization in the absence of a chain transfer agent containing an iodine atom is as described above.

As specific examples of the polymerization method, emulsion polymerization, solution polymerization, and suspension polymerization may be mentioned, and from such a viewpoint that adjustment of the molecular weight and the copolymer composition, and the productivity will be excellent, emulsion polymerization is preferred.

In a case where the production of the fluorinated copolymer is conducted by emulsion polymerization, this can be done, for example, by heating the above-mentioned monomers in the presence of an aqueous medium, an emulsifier, and a radical polymerization initiator.

The aqueous medium is preferably water or a mixture of water and a water-soluble organic solvent.

As the water-soluble organic solvent, tert-butanol, propylene glycol, dipropylene glycol, dipropylene glycol monomethyl ether, and tripropylene glycol may be mentioned. Tert-butanol and dipropylene glycol monomethyl ether are particularly preferred.

In a case where the aqueous medium contains a water-soluble organic solvent, the content of the water-soluble organic solvent is preferably from 1 to 40 parts by mass, more preferably from 3 to 30 parts by mass, to 100 parts by mass of water.

The amount of the aqueous medium to be used is preferably from 150 to 400 parts by mass, particularly preferably from 250 to 350 parts by mass, to 100 parts by mass of the monomers.

As the emulsifier, an emulsifier which has been conventionally used for emulsion polymerization may be used, and from such a viewpoint that the mechanical stability and chemical stability of the obtainable latex will be excellent, an ionic emulsifier is preferred, and an anionic emulsifier is particularly preferred.

As specific examples of the anionic emulsifier, a hydrocarbon emulsifier such as sodium lauryl sulfate or sodium dodecylbenzenesulfonate, and a fluorinated fatty acid salt such as ammonium perfluorooctanoate, sodium perfluorooctanoate or ammonium perfluorohexanoate, may be mentioned. Further, a fluorinated emulsifier represented by F(CF₂)ₚO(CF(X³)CF₂O)_{q}CF(Y)COOA (in the formula, X³ and Y each independently represent a fluorine atom or a C₁₋₃ perfluoroalkyl group, A represents a hydrogen atom, an alkali metal atom or NH₄, p represents an integer of from 1 to 10 and q represents an integer of from 0 to 3) is also preferred. As specific examples of the alkali metal atom in A, sodium and potassium may be mentioned.

As specific examples of the fluorinated emulsifier represented by F(CF₂)ₚO(CF(X³)CF₂O)_{q}CF(Y)COOA, F(CF₂)₃O(CF(CF₃)CF₂O)₂CF(CF₃)COONH₄, F(CF₂)₃OCF(CF₃)CF₂OCF(CF₃)COONH₄, F(CF₂)₃OCF₂CF₂OCF₂COONH₄, F(CF₂)₃O(CF₂CF₂O)₂CF₂COONH₄, F(CF₂)₄OCF₂CF₂OCF₂COONH₄, F(CF₂)₄O(CF₂CF₂O)₂CF₂COONH₄, F(CF₂)₃OCF₂CF₂OCF₂COONa, F(CF₂)₃O(CF₂CF₂O)₂CF₂COONa, F(CF₂)₄OCF₂CF₂OCF₂COONa, F(CF₂)₄O(CF₂CF₂O)₂CF₂COONa, F(CF₂)₂OCF₂CF₂OCF₂COONH₄, F(CF₂)₂O(CF₂CF₂O)₂CF₂COONH₄, F(CF₂)₂OCF₂CF₂OCF₂COONa, F(CF₂)₂O(CF₂CF₂O)₂CF₂COONa, CF₃OCF₂CF₂CF₂OCF₂COONH₄, CF₃OCF₂CF₂CF₂OCF(CF₃)COONH₄, CF₃OCF₂CF₂CF₂OCF₂COONa, CF₃OCF₂CF₂CF₂OCF(CF₃)COONa, CF₃O(CF₂O)₃CF₂COONH₄, CF₃O(CF₂O)₃CF₂COONa, CF₃OCF(CF₃)CF₂OCF(CF₃)COONH₄, CF₃OCF(CF₃)CF₂OCF(CF₃)COONa, CF₃O(CF₂CF₂O)₂CF₂COONH₄ and CF₃O(CF₂CF₂O)₂CF₂COONa may be mentioned.

Among them, as the emulsifier, ammonium perfluorooctanoate, F(CF₂)₄OCF₂CF₂OCF₂COONH₄, F(CF₂)₃OCF₂CF₂OCF₂COONH₄, F(CF₂)₂OCF₂CF₂OCF₂COONH₄ and CF₃OCF₂CF₂CF₂OCF₂COONH₄ are preferred.

The molecular weight of the emulsifier is preferably from 100 to 1000, particularly preferably from 100 to 500, from such a viewpoint that the emulsifier can easily be removed at the time when the obtained latex is agglomerated to isolate the fluorinated copolymer.

The amount of the emulsifier to be used is preferably from 1 to 10 parts by mass, more preferably from 3 to 5 parts by mass, to 100 parts by mass of the aqueous medium.

As the radical polymerization initiator, a water-soluble polymerization initiator and a redox polymerization initiator are preferred.

As specific examples of the water-soluble polymerization initiator, persulfates such as ammonium persulfate, sodium persulfate and potassium persulfate, and organic polymerization initiators such as disuccinic acid peroxide and azobisisobutylamidine dihydrochloride, may be mentioned; among them, persulfates are preferred, and ammonium persulfate is more preferred.

As the redox polymerization initiator, a polymerization initiator having a persulfate and a reducing agent combined, may be mentioned. Among them, a polymerization initiator capable of polymerizing the respective monomers at a polymerization temperature within a range of from 0 to 80°C, is preferred. As specific examples of the persulfate to constitute the redox polymerization initiator, an alkali metal salt of a persulfate such as ammonium persulfate, sodium persulfate, potassium persulfate, etc., and ammonium persulfate are preferred. As specific examples of the reducing agent to be combined with the persulfate, a thiosulfate, a sulfite, a hydrogen sulfite, a pyrosulfite and a hydroxymethanesulfite are preferred, and sodium hydroxymethanesulfite is particularly preferred.

In the production of the fluorinated copolymer, it is preferred to add the monomers as divided in multiple times. In particular, it is preferred to add TFE, PAVE and R_{CN} as divided in multiple times. By being added as divided in multiple times, the respective monomer units can be uniformly distributed in the fluorinated copolymer.

The amount of the radical polymerization initiator to be used is preferably from 0.03 to 0.50 part by mass, particularly preferably from 0.05 to 0.10 part by mass, to 100 parts by mass of the monomers.

In a case where the production of the fluorinated copolymer is conducted by emulsion polymerization, the latex obtained by emulsion polymerization may be flocculated to isolate the fluorinated copolymer.

As the flocculation method, addition of a metal salt, or addition of an inorganic acid such as hydrochloric acid, sulfuric acid or nitric acid, may be mentioned, and addition of an inorganic acid is preferred from such a viewpoint that inclusion of a metal in the obtainable fluorinated copolymer will be less, such being suitable for use as a component (e.g. an O-ring) which a semiconductor production device has.

With respect to components other than the above to be used in the production of fluorinated copolymer and details of the production method, the method described in paragraphs 0019 to 0034 of WO2010/082633 may be referred to.

However, at the time of the production of the fluorinated copolymer of the present invention, it is preferred not to use a chain transfer agent containing iodine atoms. This makes it easier to adjust G'_{0.3}/G'_{0.03} to be within the above-mentioned range.

### [Fluorinated copolymer composition]

The fluorinated copolymer composition of the present invention comprises the above-described fluorinated copolymer and a crosslinking agent.

As specific examples of the crosslinking agent, an organic peroxide, and a compound having at least two amino groups (hereinafter referred to also as a "polyamine compound") may be mentioned, and a polyamine compound is preferred from such a viewpoint that it is excellent in crosslinking properties for a fluorinated copolymer, and it is possible to obtain a cross-linked rubber article with a smaller compression set at high temperatures.

As specific examples of the organic peroxide, a dialkyl peroxide, α,α'-bis(tert-butylperoxy)-p-diisopropylbenzene, α,α'-bis(tert-butylperoxy)-m-diisopropylbenzene, benzoyl peroxide, tert-butylperoxybenzene and 2,5-dimethyl-2,5-di(benzoyl peroxy)hexane may be mentioned.

As specific examples of the dialkyl peroxide, 1,1-di(tert-butylperoxy)-3,3,5-trimethylcyclohexane, 2,5-dimethylhexane-2,5-dihydroxyperoxide, tert-butylcumylperoxide, dicumylperoxide, 2,5-dimethyl-2,5-di(tert-butylperoxy)hexane, 2,5-dimethyl-2,5-di(tert-butylperoxy)-3-hexine, tert-butylperoxymaleic acid and tert-butylperoxy isopropyl carbonate may be mentioned.

As specific examples of the polyamine compound, hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter referred to also as "BOAP", another name: bisaminophenol AF), 2,2-bis(3,4-diaminophenyl)propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, adipic acid dihydrazide, and a compound represented by the formula (XII) in Japanese Patent No. 5833657, may be mentioned. Among them, BOAP is preferred from such a viewpoint that the effects of the present invention will be more excellent.

The content of the crosslinking agent is preferably less than 1.0 part by mass, more preferably at most 0.9 part by mass, further preferably at most 0.8 part by mass, particularly preferably at most 0.6 part by mass, to 100 parts by mass of the fluorinated copolymer. When the content of the crosslinking agent is within the above range, it is possible to obtain a cross-linked rubber article with a smaller compression set at high temperatures.

The lower limit value of the content of the crosslinking agent is at least 0.01 part by mass, more preferably at least 0.1 part by mass, further preferably at least 0.2 part by mass, most preferably at least 0.4 part by mass, to 100 parts by mass of the fluorinated copolymer. When the content of the crosslinking agent is within the above range, the mold-releasing properties of the cross-linked article will be more excellent.

### <Other components>

The fluorinated copolymer composition may contain components other than those mentioned above to such an extent that the effects of the invention will not be impaired. As other components, a crosslinking aid (e.g. triallyl cyanurate, triallyl isocyanurate or trimethallyl isocyanurate), an acid acceptor (e.g. a fatty acid ester, a fatty acid metal salt, an oxide of a divalent metal (such as magnesium oxide, calcium oxide, zinc oxide or lead oxide), a filler and a reinforcement material (e.g. carbon black, barium sulfate, calcium metasilicate, calcium carbonate, titanium dioxide, silicon dioxide, clay or talc), a scorch retardant (e.g. a phenolic hydroxy group-containing compound such as bisphenol A, a quinone such as hydroquinone, or an α-methylstyrene dimer such as 2,4-di(3-isopropylphenyl)-4-methyl-1-pentene), a crown ether (e.g. 18-crown-6), and a mold releasing agent (e.g. sodium stearate) may be mentioned.

Although the fluorinated copolymer composition may contain a mold releasing agent, the mold releasing agent may bleed out from the surface of the cross-linked rubber article obtained by using it, thus causing contamination. Therefore, from the viewpoint of suitably using as a component (e.g. an O-ring) which a semiconductor producing device has, it is preferred that the fluorinated copolymer composition does not substantially contain a mold releasing agent.

Here, "the fluorinated copolymer composition does not substantially contain a mold releasing agent" means that the content of the mold releasing agent is at most 0.1 part by mass, preferably at most 0.01 part by mass, particularly preferably 0 part by mass, to 100 parts by mass of the fluorinated copolymer.

In a case where the fluorinated copolymer composition contains other components, the total content of other components is more than 0.1 part by mass and at most 30 parts by mass, more preferably from 1 to 25 parts by mass, particularly preferably from 5 to 15 parts by mass, to 100 parts by mass of the fluorinated copolymer.

As a method for preparing a fluorinated copolymer composition, a method of mixing the above-mentioned respective components, may be mentioned. Mixing of the respective components may be carried out by using a mixing device for rubber, such as rolls, a kneader, a Banbury mixer, or an extruder.

Further, after obtaining a mixture of the above respective components, the mixture may be molded. As a specific example of the molding method of the mixture, compression molding, injection molding, extrusion molding, calendaring molding, or a method of dissolving the mixture in a solvent, followed by dipping or coating a substrate or the like, may be mentioned.

### [Cross-linked rubber article]

The cross-linked rubber article is a rubber article in which the fluorinated copolymer in the above-described fluorinated copolymer composition is crosslinked.

As a method of crosslinking the fluorinated copolymer in the fluorinated copolymer composition, a method for crosslinking by heating the fluorinated copolymer composition is preferred.

As specific examples of the crosslinking method by heating, heat press crosslinking, steam crosslinking, and hot air crosslinking may be mentioned. The method may be suitably selected from these methods, in consideration of the shape and application of the fluorinated copolymer or the fluorinated copolymer composition.

The heating conditions are preferably from 100 to 400°C for from 1 second to 24 hours.

The cross-linked rubber made by heating (primary crosslinking) a fluorinated copolymer composition may be further heated for secondary crosslinking. By conducting the secondary crosslinking, it is possible to stabilize or improve the mechanical properties, compression set and other properties of the cross-linked rubber.

The heating conditions at the time of conducting the secondary crosslinking are preferably from 80 to 350°C for from 30 minutes to 48 hours.

As a crosslinking method other than crosslinking the fluorinated copolymer by heating, a method may be mentioned, in which the fluorinated copolymer is crosslinked by irradiating the fluorinated copolymer composition with radiation. As specific examples of radiation to be irradiated, electron beams and ultraviolet rays may be mentioned.

### <Physical properties>

The tensile strength (tensile breaking strength) of the cross-linked rubber article is preferably from 15 to 40 MPa, particularly preferably from 21 to 35 MPa, from such a viewpoint that rubber properties will be excellent.

The 100% modulus (tensile stress at 100% elongation) of the cross-linked rubber article is preferably from 3.0 to 5.0 MPa, particularly preferably from 3.5 to 4.4 MPa, from such a viewpoint that rubber properties will be excellent.

The tensile elongation (elongation at break) of the cross-linked rubber article is preferably from 100 to 250%, particularly preferably from 180 to 215%, from such a viewpoint that rubber properties will be excellent.

The tensile strength, the 100% modulus, and the elongation at break of the cross-linked rubber article are values to be measured by methods in accordance with JIS K6251:2010 (corresponding international standard ISO 37:2005).

The hardness (Shore-A) of the cross-linked rubber article is preferably from 50 to 90, more preferably from 60 to 80, particularly preferably from 65 to 75, from such a viewpoint that rubber properties will be excellent.

The hardness (Shore-A) of the cross-linked rubber article is a value to be measured by using a Type A durometer in accordance with JIS K6253-1:2012, using a plate-shaped molded product (thickness: 1 mm) of the cross-linked rubber article.

The compression set of the cross-linked rubber article at 300°C is preferably at most 20%, and, from such a viewpoint that the fluorinated copolymer is well cross-linked and the shape recovery after pressurization of the cross-linked rubber article is excellent, is more preferably at most 15%, further preferably at most 13%, particularly preferably at most 11%.

The lower limit value of the compression set at 300°C of the cross-linked rubber article is preferably 0%.

The compression set of the cross-linked rubber article at 320°C is preferably at most 35%, and, from such a viewpoint that the fluorinated copolymer is well cross-linked and the shape recovery after pressurization of the cross-linked rubber article is excellent, is more preferably at most 30%, further preferably at most 29%, particularly preferably at most 24%.

The lower limit value of the compression set at 320°C of the cross-linked rubber article is preferably 0%.

The compression set of the cross-linked rubber article at 325°C is preferably at most 35%, and, from such a viewpoint that the fluorinated copolymer is well cross-linked and the shape recovery after pressurization of the cross-linked rubber article is excellent, is more preferably at most 30%, further preferably at most 29%, particularly preferably at most 27%.

The lower limit value of the compression set at 325°C of the cross-linked rubber articles is preferably 0%.

The compression sets at 300°C, 320°C and 325°C of the cross-linked rubber article are values to be measured in accordance with JIS K6301 by using a plate-shaped molded product (thickness: 1 mm) of the cross-linked rubber article.

The above-described respective physical properties of the cross-linked rubber article can be adjusted by, for example, the production conditions of the above fluorinated copolymer (e.g. addition order, number of additions and amounts of the respective monomers), the types and contents of the respective components contained in the above fluorinated copolymer composition, and the production conditions (e.g. cross-linking conditions) of the cross-linked rubber article.

### <Use>

The cross-linked rubber article is suitable as a material for O-rings, sheets, gaskets, oil seals, diaphragms, V-rings, etc. It is applicable also to applications as heat and chemical resistant sealing materials, heat and oil resistant sealing materials, wire coating materials, sealing materials for semiconductor devices, sealing materials for LCD panel manufacturing equipment, sealing materials for light emitting diode manufacturing equipment, corrosion resistant rubber paint, sealing materials for urea resistant grease, etc., rubber paint, adhesive rubber, hoses, tubes, calendar sheets (rolls), sponges, rubber rolls, oil drilling parts, heat radiation sheets, solution cross-linked bodies, rubber sponges, bearing seal (urea grease resistant, etc.), lining (chemical resistant), automotive insulation sheets, electronic device insulation sheets, rubber bands for watches, packing for endoscope (amine resistant), bellows hoses (processed from calendar sheets), packing/valves for water heaters, fenders (marine civil engineering, ships), fibers and non-woven fabrics (protective clothing, etc.), base sealing materials, rubber gloves, stators of uniaxial eccentric screw pumps, parts for urea SCR systems, vibration isolators, vibration damping agents, sealing agents, additives for other materials, and toys.

### EXAMPLES

In the following, the present invention will be described in detail with reference to Examples. Ex. 1-1, Ex. 1-2, Ex. 1-5, Ex. 1-6, Ex. 2-1 to Ex. 2-4, Ex. 2-8, Ex. 2-9, Ex. 2-11 and Ex. 2-12 are Examples of the present invention, and Ex. 1-3, Ex. 1-4, Ex. 2-5, Ex. 2-6, Ex. 2-7 and Ex. 2-10 are Comparative Examples. However, the present invention is not limited to these Examples. The contents of the respective components in Tables given later are shown on a mass basis unless otherwise noted.

### [Contents of units based on the respective monomers in the fluorinated copolymer]

The content (mol%) of monomer A units to all units of the fluorinated copolymer was calculated based on the amount of monomer A used in the production of the fluorinated copolymer (amount of monomer A used).

The contents (mol%) of TFE units, PAVE units and R_{CN} units to all units of the fluorinated copolymer were calculated based on ¹⁹F-nuclear magnetic resonance (NMR) analysis.

### <Calculation of the content of monomer A units to all units of the fluorinated copolymer>

The filtrate after flocculating the latex after polymerization and taking out the fluorinated copolymer and the filtrate remaining after washing the latex, were filtered through a disk filter, and the obtained liquid was analyzed by an ion chromatograph measuring device (manufactured by DIA Instruments, an apparatus having a pretreatment device AQF-100 model for ion chromatography with automatic sample burning device and an ion chromatograph combined).

In a case where fluoride ions of at least 3 mass% to the charged amount of monomer A were detected, as the amount of monomer A, a value obtained by subtracting the amount of monomer A in the liquid calculated based on the above ion chromatograph measurement results from the amount of monomer A added to the reactor (the charged amount of monomer A) was used.

On the other hand, in a case where fluoride ions of at least 3 mass% to the charged amount of monomer A, were not detected, all monomer A used for the charging was assumed to have been polymerized, and as the amount of monomer A used, the charged amount of monomer A was used.

Based on the amount of monomer A units used, thus obtained, the content (mol%) of monomer A units to all units of the fluorinated copolymer was calculated.

### <Content of iodine atoms in fluorinated copolymer>

Assuming that charged DIB was all polymerized, the ratio of the mass (mass%) of iodine atoms contained in charged DIB to the entire mass of the fluorinated copolymer was adopted as the content of iodine atoms in the later-described copolymer 4, as the fluorinated copolymer.

The later-described copolymers 1 to 3, 5 and 6 being fluorinated copolymers, do not contain iodine atoms because they are polymerized without using raw materials containing iodine atoms.

### [G'_{0.3}/G'_{0.03} of fluorinated copolymer]

A value measured by using a rubber processing analyzer (manufactured by Alpha Technologies, RPA2000) in accordance with ASTM D6204 at a temperature of 140°C and an angular frequency of 0.3 rad/s, was adopted as G'_{0.3} of the fluorinated copolymer.

Except for changing the angular frequency to 0.03 rad/s, the G'_{0.03} of the fluorinated copolymer was measured in the same manner as the above G'_{0.3}.

Based on the obtained values, G'_{0.3}/G'_{0.03} of the fluorinated copolymer was calculated.

### [Degree of crosslinking in fluorinated copolymer composition]

With respect to the fluorinated copolymer composition, M_{H} and M_{L} were measured by using a rubber processing analyzer (manufactured by Alpha Technologies, RPA2000) under conditions of 177°C for 12 minutes with an amplitude of 3 degrees and a frequency of 100 vibrations per minute.

The M_{H} to be measured, indicates the maximum torque value, M_{L} indicates the minimum torque value, and M_{H} - M_{L} (M_{H} minus M_{L}) indicates the degree of crosslinking (unit: dNm). The degree of crosslinking is an index for the crosslinking reactivity of the fluorinated copolymer, and the larger, the value of M_{H} - M_{L}, the better the crosslinking reactivity.

### [Specific gravity of cross-linked rubber article]

With respect to the cross-linked rubber article, the specific gravity was measured by using a specific gravity meter (manufactured by Shinko Electronics) in accordance with JIS K6220-1:2015.

### [Tensile strength, 100% modulus and tensile elongation of cross-linked rubber article]

The tensile strength, 100% modulus and tensile elongation were measured in accordance with JIS K6251:2010 (corresponding to International Standard ISO 37:2005) using specimens punched out of a plate-shaped cross-linked rubber article (thickness: 1 mm) by a No. 4 dumbbell.

Here, as the measuring device, a tensile tester with data processing (Quick Reader TS-2530, manufactured by Ueshima Seisakusho Co., Ltd.) was used.

Further, each test was conducted by using three specimens, and the arithmetic mean value of the measured values of the three specimens was recorded.

### [Hardness]

The hardness (Shore-A) was measured by using a Type A durometer in accordance with JIS K6253-3:2012 using specimens of the cross-linked rubber article.

Here, as the measuring device, an automatic hardness tester for rubber (Digitest Shore A, manufactured by H. Bareiss) was used.

Further, the test was conducted by using three specimens, and the arithmetic mean value of the measured values of the three specimens was recorded.

### [Compression set]

Using specimens of the cross-linked rubber article, the compression set (%) at the time when the test specimens were held at 300°C for 70 hours, the compression set (%) at the time when the test specimens were held at 320°C for 70 hours, and the compression set (%) at the time when the test specimens were held at 325°C for 70 hours, were, respectively, measured in accordance with JIS K6301. The smaller the value of the compression set, the better the recovery of the cross-linked rubber article, i.e. it is well cross-linked.

Here, the test was conducted by using three specimens, and the arithmetic mean value of the measured values of the three specimens was recorded.

### [Heat aging test]

After the thicknesses of specimens of the cross-linked rubber article were measured by a Thickness Gauge, the specimens were heated at 300°C for 70 hours in an air atmosphere (heat aging).

After cooling the specimens after the heat aging, to room temperature, by using the specimens after cooling, the tensile strength and tensile elongation after heat aging were measured under the same conditions as in the above-described test methods.

The test was conducted by using three specimens, and the arithmetic mean value of the measured values of the three specimens was recorded.

Based on the measured values of the specimens without heat aging (normal test values) and the measured values of the specimens after heat aging (test values after heat aging), the change rate before and after the heat aging test (change rate by heat aging test) was calculated in accordance with the following formula. The closer the change rate to 0%, the better the heat resistance. 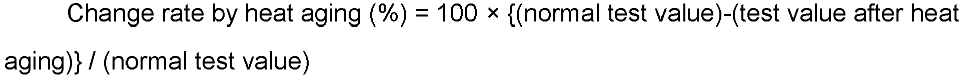 Change rate by heat aging (%) = 100 × {(normal test value)-(test value after heat aging)} / (normal test value)

.

### [Mold releasability test]

Into a sheet-shaped mold, the fluorinated copolymer composition was introduced, and the fluorinated copolymer composition was cross-linked at 180°C for 20 minutes to obtain a cross-linked rubber article (length 100 mm x width 60 mm x thickness 1 mm) in a state adhered to the mold. Immediately after the crosslinking reaction was completed, by using an air gun (product name: Cyclone Duster, manufactured by Chuo Pneumatic Co., Ltd.), air was injected at the interface between the cross-linked rubber article and the mold, whereby evaluation of the mold releasability was conducted by the following evaluation standards.

Here, since air is injected immediately after completion of the crosslinking reaction, the temperature of the cross-linked article at the time of air injection is considered to be close to 180°C.

### <Conditions for air injection by an air gun>

Pressure: 0.5 MPa
Air injection time: 3 sec.
<Evaluation standards>
   ○: The cross-linked rubber article was released from the mold.
   ×: The cross-linked rubber article was not released from the mold.

### [Ex. 1-1]

### <Production of fluorinated copolymer>

After degassing a stainless steel pressure-resistant reactor of 20 L internal volume equipped with anchor blades, 7.2 L of ultrapure water, 880 g of a 30 mass% aqueous solution of the emulsifier C₂F₅OCF₂CF₂OCF₂COONH₄, 7.3 g of 8CNVE, 6.8 g of C3DVE, and 15.9 g of a 5 mass% aqueous solution of disodium hydrogen phosphate 12-hydroxide, were charged. While stirring by using the anchor blades, 137 g of TFE and 635 g of PMVE were charged into the vessel, and then, the internal temperature was raised to 80°C. The pressure in the reactor was 0.90 MPa [gauge]. Polymerization was started by adding 40 mL of a 3 mass% aqueous solution of ammonium persulfate (APS). A monomer that was injected before the start of polymerization will be hereinafter referred to also as an "initially added monomer".

After the start of polymerization, monomers were injected as follows as the polymerization progressed. Hereafter, injection of monomers after the start of polymerization will be referred to also as "post-adding" and a monomer to be injected after the start of polymerization will be referred to also as a "post-added monomer".

When the reactor internal pressure decreased to 0.89 MPa [gauge], TFE, 8CNVE, and PMVE were injected to raise the reactor internal pressure to 0.90 MPa [gauge]. This was repeated each time when the reactor internal pressure decreased to 0.89 MPa [gauge].

When the polymerization rate decreased, a 3 mass% aqueous solution of APS was added as needed. The total amount of the 3 mass% aqueous solution of APS added after the start of polymerization was 40 mL.

At the time when the total added mass of TFE reached 1193 g, the addition of post-added monomer was stopped, the internal temperature of the reactor was cooled to stop the polymerization reaction, to obtain a latex containing the fluorinated copolymer. The polymerization time was 429 minutes. The total masses of the respective post-added monomers were 1193 g of TFE, 668 g of PMVE, and 66.7 g of 8CNVE.

The obtained latex was added to a 3 mass% aqueous solution of nitric acid (special grade manufactured by Kanto Chemical Co., Ltd.) to flocculate the fluorinated copolymer. The fluorinated copolymer was filtered, washed with water and vacuum-dried to obtain a white fluorinated copolymer. The contents (molar ratios) of the respective units in the obtained fluorinated copolymer (hereinafter referred to also as "Copolymer 1") were TFE units/PMVE units/8CNVE units/C3DVE units = 69.8/29.5/0.6/0.1.

Further, the filtrate after flocculating the latex after polymerization and taking out the fluorinated copolymer and the filtrate remaining after washing the latex, were filtered through a disk filter, and the obtained liquid was analyzed by an ion chromatograph measuring system, whereby fluoride ions of at least 3 mass% to the charged amount of C3DVE were not detected. Therefore, assuring that all C3DVE used for charging has been polymerized, the content of C3DVE units to all units in the polymer was calculated based on the charged amount of C3DVE.

### [Ex. 1-2 to Ex. 1-3, Ex. 1-5, Ex. 1-6]

Fluorinated copolymers were obtained in the same manner as in Ex. 1-1, except that the types of monomers used, the amounts of initially added monomers, the amounts of post-added monomers and the amounts of polymerization initiator added were changed as shown in Table 1. Hereinafter, the fluorinated copolymer obtained in Ex. 1-2 will be referred to as "Copolymer 2," the fluorinated copolymer obtained in Ex. 1-3 will be referred to as "Copolymer 3," the fluorinated copolymer obtained in Ex. 1-5 will be referred to as "Copolymer 5", and the fluorinated copolymer obtained in Ex. 1-6 will be referred to as "Copolymer 6".

### [Ex. 1-4].

A fluorinated copolymer was obtained in the same manner as in Ex. 1-1, except that the types of monomers used, the amounts of initially added monomers, the amounts of post-added monomers and the amounts of polymerization initiator were changed as shown in Table 1, and 3.8 g of DIB as a chain transfer agent, was added to the polymerization tank before the start of polymerization, together with ultrapure water, emulsifier, 8CNVE, C3DVE, disodium hydrogen phosphate-12 hydrate. The fluorinated copolymer obtained in Ex. 1-4 will be hereinafter referred to as "Copolymer 4.

**[Table 1]**

| | | | Ex. 1-1 | Ex. 1-2 | Ex. 1-3 | Ex. 1-4 | Ex. 1-5 | Ex. 1-6 |
|---|---|---|---|---|---|---|---|---|
| Types of monomers used for production of the fluorinated copolymer | | | TFE | TFE | TFE | TFE | TFE | TFE |
| | | | PMVE | PMVE | PMVE | PMVE | PMVE | PMVE |
| | | | 8CNVE | 8CNVE | 8CNVE | 8CNVE | 8CNVE | 8CNVE |
| | | | C3DVE | C3DVE | - | C3DVE | C3DVE | C3DVE |
| Initially added monomers | TFE | g | 137 | 137 | 137 | 137 | 137 | 137 |
| | PMVE | g | 635 | 635 | 635 | 635 | 635 | 635 |
| | 8CNVE | g | 7.3 | 7.3 | 7.3 | 7.3 | 7.3 | 7.3 |
| | C3DVE | g | 6.8 | 3.5 | 0.0 | 3.5 | 5.3 | 10.6 |
| Post-added monomers | TFE | g | 1193 | 1193 | 1193 | 1193 | 1193 | 1193 |
| | PMVE | g | 668 | 668 | 668 | 668 | 668 | 668 |
| | 8CNVE | g | 66.7 | 66.7 | 66.2 | 66.2 | 66.1 | 66.7 |
| | C3DVE | g | 0 | 0 | 0 | 0 | 0 | 0 |
| Liquid phase charging | Ultrapure water | L | 7.2 | 7.2 | 7.2 | 7.2 | 7.2 | 7.2 |
| | 30% emulsifier aqueous solution | g | 880 | 880 | 880 | 880 | 880 | 880 |
| | 5% disodium hydrogen phosphate aqueous solution | g | 15.9 | 15.9 | 15.9 | 15.9 | 15.9 | 15.9 |
| Polymerization initiator | Initially charged amount of 3% APS aqueous solution | mL | 40 | 40 | 40 | 40 | 40 | 40 |
| | Additionally added amount of 3% APS aqueous solution | mL | 40 | 40 | 35 | 35 | 40 | 35 |
| Chain transfer agent | DIB | Mol% to polymer | - | - | - | 0.05 | - | - |
| | | g | - | - | - | 3.8 | - | - |
| Name of the obtained fluorinated polymer | | | Copolymer 1 | Copolymer 2 | Copolymer 3 | Copolymer 4 | Copolymer 5 | Copolymer 6 |

The physical properties of each of the obtained fluorinated copolymers were measured. The results are shown in Table 2.

**[Table 2]**

| | | | Ex. 1-1 | Ex. 1-2 | Ex. 1-3 | Ex. 1-4 | Ex. 1-5 | Ex. 1-6 |
|---|---|---|---|---|---|---|---|---|
| Fluorinated polymer | | | Copolymer 1 | Copolymer 2 | Copolymer 3 | Copolymer 4 | Copolymer 5 | Copolymer 6 |
| Contents (molar ratios) of respective units in fluorinated copolymer | TFE unit | mol% | 69.8 | 69.84 | 69.8 | 69.2 | 70.78 | 70.07 |
| | PMVE unit | mol% | 29.5 | 29.5 | 29.6 | 30.4 | 28.61 | 29.14 |
| | 8CNVE unit | mol% | 0.6 | 0.6 | 0.6 | 0.34 | 0.52 | 0.60 |
| | C3DVE unit | mol% | 0.1 | 0.06 | 0 | 0.06 | 0.09 | 0.19 |
| | Monomer A units/CN units | - | 0.17 | 0.10 | 0 | 0.18 | 0.17 | 0.32 |
| Content of iodine atoms in fluorinated copolymer | | mass% | 0.00 | 0.00 | 0.00 | 0.11 | 0.00 | 0.00 |
| Physical properties of fluorinated copolymer | G'_{0.03} | kPa | 497 | 472 | 438 | 58 | 548 | 567 |
| | G'_{0.3} | kPa | 696 | 675 | 648 | 135 | 669 | 707 |
| | G'_{0.3}/G'_{0.03} | - | 1.40 | 1.43 | 1.48 | 2.33 | 1.22 | 1.25 |

### [Ex. 2-1]

### <Production of fluorinated copolymer composition>

A fluorinated copolymer composition was obtained by mixing the respective components in the ratio of 100 parts by mass of copolymer 1, 5 parts by mass of MT-C (manufactured by Cancarb, MT Carbon) and 0.5 part by mass of BOAP (2,2-bis(3-amino-4-hydroxyphenyl)hexafluoropropane, crosslinking agent) and kneading them by two rolls. The obtained fluorinated copolymer composition will hereinafter be referred to as "fluorinated copolymer composition 1".

### <Production of cross-linked rubber article>

The fluorinated copolymer composition 1 was cross-linked and molded at 180°C for 20 minutes to obtain a cross-linked rubber sheet of 100 mm in length × 60 mm in width × 1 mm in thickness (primary crosslinking). And, under a nitrogen atmosphere, the cross-linked rubber sheet was heated at 90°C for 3 hours, then the temperature was raised to 305°C over a period of 5 hours, and while keeping the temperature at 305°C, it was further heated for 13 hours (secondary crosslinking).

After cooling the obtained cross-linked rubber sheet after secondary crosslinking to room temperature, it was punched into a No. 4 dumbbell shape as specified in JIS K6251 to obtain three specimens of the cross-linked rubber article. The obtained cross-linked rubber article will hereinafter be referred to as "cross-linked rubber article 1".

### [Ex. 2-2 to Ex. 2-12]

Fluorinated copolymer compositions 2 to 12 were obtained in the same manner as in the production of the fluorinated copolymer composition 1, except that the fluorinated copolymers, crosslinking agents and carbon black shown in Table 3-1 and Table 3-2 were used. Further, specimens of the cross-linked rubber articles 2 to 12 were obtained in the same manner as in the production of the cross-linked rubber article 1, except that the fluorinated copolymer compositions 2 to 12 were used.

The physical properties of the obtained fluorinated copolymer compositions and the cross-linked rubber articles were measured, and the respective evaluation tests for the cross-linked rubber articles were conducted. The results are shown in Table 3-1 and Table 3-2.

Here, in the cross-linked rubber article 9 in Ex. 2-9, small cracks were observed after measuring the compression set after being held at 300°C for 70 hours. Further, in the cross-linked rubber article 11 in Ex. 2-11 and in the cross-linked rubber article 12 in Ex. 2-12, small cracks were observed after measuring the compression set after being held at 325°C for 70 hours.

**[Table 3-1]**

| | | | Ex. 2-1 | Ex. 2-2 | Ex. 2-3 | Ex. 2-4 | Ex. 2-5 | Ex. 2-6 |
|---|---|---|---|---|---|---|---|---|
| Composition | Composition (parts by mass) | Copolymer 1 | 100 | 100 | - | - | - | - |
| | | Copolymer 2 | - | - | 100 | 100 | - | - |
| | | Copolymer 3 | - | - | - | - | 100 | - |
| | | Copolymer 4 | - | - | - | - | - | 100 |
| | | Copolymer 5 | - | - | - | - | - | - |
| | | Copolymer 6 | - | - | - | - | - | - |
| | | MT-C | 5 | 5 | 5 | 5 | 5 | 5 |
| | | BOAP | 0.5 | 1.0 | 0.5 | 1.0 | 0.5 | 0.5 |
| Physical properties of composition | M_{H} | dNm | 68.7 | 79.7 | 68.1 | 78.4 | 47.2 | 42.0 |
| | M_{L} | dNm | 16.4 | 16.1 | 15.5 | 15.5 | 12.7 | 7.0 |
| | M_{H}-M_{L} | dNm | 52.3 | 63.6 | 52.6 | 63.0 | 34.5 | 35.0 |
| Physical properties of cross-linked rubber article | Specific gravity | g/cm³ | 2.045 | 2.037 | 2.040 | 2.042 | 2.043 | 2.041 |
| | Tensile strength | MPa | 21.5 | 21.6 | 22.9 | 22.9 | 20.7 | 20.2 |
| | Tensile elongation | % | 199 | 189 | 210 | 197 | 257 | 267 |
| | 100% modulus | MPa | 3.59 | 4.33 | 3.52 | 3.91 | - | 3.10 |
| | Hardness | Shore A | 69 | 70 | 69 | 71 | 67 | 68 |
| | Compression set (300°C) | % | 11 | Fracture | 11 | Fracture | 24 | 28 |
| | Com pression set (320°C) | % | 20.0 | Fracture | 23.2 | Fracture | 37.4 | 48.1 |
| | Com pression set (325°C) | % | - | - | - | - | - | - |
| Heat aging test 300°C, 70h | Tensile strength | % | 13 | 11 | -5 | -3.7 | -1 | -1 |
| | Tensile elongation | % | 14 | 11 | 3 | 5 | 11 | 12 |
| Mold releasability test | | | ○ | ○ | ○ | ○ | × | × |

**[Table 3-2]**

| | | | Ex. 2-7 | Ex. 2-8 | Ex. 2-9 | Ex. 2-10 | Ex. 2-11 | Ex. 2-12 |
|---|---|---|---|---|---|---|---|---|
| Composition | Composition (parts by mass) | Copolymer 1 | - | - | - | - | - | - |
| | | Copolymer 2 | - | - | - | - | - | - |
| | | Copolymer 3 | | | | | | |
| | | Copolymer 4 | - | - | - | - | - | - |
| | | Copolymer 5 | 100 | 100 | 100 | - | - | - |
| | | Copolymer 6 | - | - | - | 100 | 100 | 100 |
| | | MT-C | 5 | 5 | 5 | 5 | 5 | 5 |
| | | BOAP | 0.3 | 0.5 | 0.8 | 0.2 | 0.3 | 0.5 |
| Physical properties of composition | M_{H} | dNm | 54.4 | 68.5 | 76.4 | 44.8 | 54.0 | 65.7 |
| | M_{L} | dNm | 17.5 | 16.8 | 17.5 | 17.0 | 16.9 | 16.5 |
| | M_{H}-M_{L} | dNm | 36.9 | 51.8 | 59.0 | 27.8 | 37.1 | 49.3 |
| Physical properties of cross-linked rubber article | Specific gravity | g/cm³ | 2.042 | 2.041 | 2.039 | - | 2.038 | 2.038 |
| | Tensile strength | MPa | 23.7 | 20.2 | 22.0 | - | 24.2 | 22.9 |
| | Tensile elongation | % | 199 | 176 | 179 | - | 196 | 180 |
| | 100% modulus | MPa | 5.10 | 5.70 | 5.90 | - | 5.20 | 5.80 |
| | Hardness | Shore A | 71 | 72 | 72 | - | 70 | 71 |
| | Compression set (300°C) | % | 14 | 12 | 12 | - | 15 | 12 |
| | Com pression set (320°C) | % | - | - | - | - | - | - |
| | Com pression set (325°C) | % | 26 | 22 | 26 | - | 26 | 26 |
| Heat aging test 300°C, 70h | Tensile strength | % | - | - | - | - | - | - |
| | Tensile elongation | % | | - | - | | - | - |
| Mold releasability test | | | × | ○ | ○ | × | ○ | ○ |

As shown in Table 3-1 and Table 3-2, it was confirmed that by using a fluorinated copolymer having TFE units, PAVE units, monomer A units and R_{CN} units, with G'_{0.3}/G'_{0.03} in the range of from 1.00 to 1.43, and an appropriate amount of a crosslinking agent, a cross-linked rubber article excellent in mold-releasing properties can be obtained (Ex. 2-1 to Ex. 2-4, Ex. 2-8, Ex. 2-9, Ex. 2-11 and Ex. 2-12).

## Claims

1. A fluorinated copolymer having units based on tetrafluoroethylene, units based on a perfluoro(alkyl vinyl ether), units based on a monomer having a fluorine atom and at least two polymerizable unsaturated bonds, and units based on a monomer having a nitrile group and a fluorine atom, wherein
when the storage modulus of said fluorinated copolymer at an angular frequency of 0.3 rad/s is G'_{0.3} and the storage modulus of said fluorinated copolymer at an angular frequency of 0.03 rad/s is G'_{0.03}, as determined by dynamic viscoelasticity measurement at 140°C, G'_{0.3}/G'_{0.03} is from 1.00 to 1.43, and
the content of the units based on a monomer having a fluorine atom and at least two polymerizable unsaturated bonds, determined as disclosed in the description, is from 0.03 to 0.20 mol% to all units of the fluorinated copolymer.

2. The fluorinated copolymer according to Claim 1, wherein the molar ratio of the content of the units based on a monomer having a fluorine atom and at least two polymerizable unsaturated bonds to the content of the units based on a monomer having a nitrile group and a fluorine atom is from 0.002 to 7, determined according to the methods described in the description.

3. The fluorinated copolymer according to Claim 1 or 2, wherein said perfluoro(alkyl vinyl ether) is a monomer represented by the following formula (1):
CF₂=CF-O-R^{f1} (1)
in the formula (1), R^{f1} represents a C₁₋₁₀ perfluoroalkyl group.

4. The fluorinated copolymer according to any one of Claims 1 to 3, wherein the monomer having a fluorine atom and at least two polymerizable unsaturated bonds is a monomer represented by the following formula (2):
(CR²¹R²²=CR²³-)ₐ₁R²⁴ (2)
in the formula (2), R²¹, R²² and R²³ each independently represent a hydrogen atom, a fluorine atom, a methyl group or a trifluoromethyl group, a1 represents an integer of from 2 to 6, and R²⁴ represents an a1-valent C₁₋₁₀ perfluorohydrocarbon group, or a group having an etheric oxygen atom at a terminal or between carbon-carbon bonds of the perfluorohydrocarbon group, and the plurality of R²¹, the plurality of R²² and the plurality of R²³ may, respectively, be the same or different from each other.

5. The fluorinated copolymer according to Claim 4, wherein the monomer represented by the formula (2) is a monomer represented by the following formula (3), or a monomer represented by the following formula (4):
(CF₂=CF-)₂R³¹ (3)
in the formula (3), R³¹ represents a divalent C₁₋₁₀ perfluorohydrocarbon group, or a group having an etheric oxygen atom at a terminal or between carbon-carbon bonds of the perfluorohydrocarbon group;
(CH₂=CH-)₂R⁴¹ (4)
in the formula (4), R⁴¹ represents a divalent C₁₋₁₀ perfluorohydrocarbon group, or a group having an etheric oxygen atom at a terminal or between carbon-carbon bonds of the perfluorohydrocarbon group.

6. The fluorinated copolymer according to any one of Claims 1 to 5, wherein the monomer having a nitrile group and a fluorine atom is a monomer represented by the following formula (5):
CR⁵¹R⁵²=CR⁵³-R⁵⁴-CN (5)
in the formula (5), R⁵¹, R⁵² and R⁵³ each independently represent a hydrogen atom, a fluorine atom or a methyl group, and R⁵⁴ represents a divalent C₁₋₁₀ perfluorohydrocarbon group, or a group having an etheric oxygen atom at a terminal or between carbon-carbon bonds of the perfluorohydrocarbon group.

7. The fluorinated copolymer according to Claim 6, wherein all of said R⁵¹, R⁵² and R⁵³ are fluorine atoms or all of them are hydrogen atoms, and wherein R⁵⁴ has an etheric oxygen atom and the number of etheric oxygen atoms is from 1 to 3.

8. The fluorinated copolymer according to any one of Claims 1 to 7, which does not substantially contain iodine atoms, determined according to the methods described in the description.

9. A method for producing a fluorinated copolymer as defined in any one of Claims 1 to 8, which comprises copolymerizing tetrafluoroethylene, a perfluoro(alkyl vinyl ether), a monomer having a fluorine atom and at least two polymerizable unsaturated bonds, and a monomer having a nitrile group and a fluorine atom in the presence of a radical polymerization initiator.

10. The method for producing a fluorinated copolymer according to Claim 9, wherein the copolymerization is conducted in the absence of a chain transfer agent containing iodine atoms.

11. A fluorinated copolymer composition comprising a fluorinated copolymer as defined in any one of Claims 1 to 8, and a crosslinking agent.

12. The fluorinated copolymer composition according to Claim 11, wherein the crosslinking agent is a compound having at least two amino groups.

13. The fluorinated copolymer composition according to Claim 11 or 12, wherein the content of the crosslinking agent is less than 1.0 part by mass to 100 parts by mass of the fluorinated copolymer.

14. A cross-linked rubber article, having the fluorinated copolymer in the fluorinated copolymer composition as defined in any one of Claims 11 to 13 cross-linked.

## Patentansprüche

1. Fluoriertes Copolymer mit Einheiten basierend auf Tetrafluorethylen, Einheiten basierend auf einem Perfluoralkylvinylether, Einheiten basierend auf einem Monomer mit einem Fluoratom und mindestens zwei polymerisierbaren ungesättigten Bindungen und Einheiten basierend auf einem Monomer mit einer Nitrilgruppe und einem Fluoratom, wobei,
wenn der Speichermodul des fluorierten Copolymers bei einer Kreisfrequenz von 0,3 rad/s G'_{0,3} ist und der Speichermodul des fluorierten Copolymers bei einer Kreisfrequenz von 0,03 rad/s G'_{0,03} ist, wie durch dynamische Viskoelastizitätsmessung bei 140 °C bestimmt, G'_{0,3}/G'_{0,03} von 1,00 bis 1,43 beträgt, und
der Gehalt der Einheiten basierend auf einem Monomer mit einem Fluoratom und mindestens zwei polymerisierbaren ungesättigten Bindungen, bestimmt wie in der Beschreibung offenbart, von 0,03 bis 0,20 Mol-% bezogen auf alle Einheiten des fluorierten Copolymers beträgt.

2. Fluoriertes Copolymer nach Anspruch 1, wobei das Molverhältnis des Gehalts der Einheiten basierend auf einem Monomer mit einem Fluoratom und mindestens zwei polymerisierbaren ungesättigten Bindungen zu dem Gehalt der Einheiten basierend auf einem Monomer mit einer Nitrilgruppe und einem Fluoratom von 0,002 bis 7 beträgt, bestimmt gemäß den in der Beschreibung beschriebenen Verfahren.

3. Fluoriertes Copolymer nach Anspruch 1 oder 2, wobei der Perfluoralkylvinylether ein durch die folgende Formel (1) dargestelltes Monomer ist:
CF₂=CF-O-R^{f1} (1)
wobei in der Formel (1) R^{f1} eine C₁₋₁₀-Perfluoralkylgruppe darstellt.

4. Fluoriertes Copolymer nach einem der Ansprüche 1 bis 3, wobei das Monomer mit einem Fluoratom und mindestens zwei polymerisierbaren ungesättigten Bindungen ein durch die folgende Formel (2) dargestelltes Monomer ist:
(CR²¹R²²=CR^{23p}-)ₐ₁R²⁴ (2)
wobei in der Formel (2) R²¹, R²² und R²³ jeweils unabhängig voneinander ein Wasserstoffatom, ein Fluoratom, eine Methylgruppe oder eine Trifluormethylgruppe darstellen, a1 eine ganze Zahl von 2 bis 6 darstellt und R²⁴ eine a1-wertige C₁₋₁₀-Perfluorkohlenwasserstoffgruppe oder eine Gruppe mit einem etherischen Sauerstoffatom an einem Ende oder zwischen Kohlenstoff-Kohlenstoff-Bindungen der Perfluorkohlenwasserstoffgruppe darstellt, und die Mehrzahl von R²¹, die Mehrzahl von R²² und die Mehrzahl von R²³ jeweils gleich oder voneinander verschieden sein können.

5. Fluoriertes Copolymer nach Anspruch 4, wobei das durch die Formel (2) dargestellte Monomer ein durch die folgende Formel (3) dargestelltes Monomer oder ein durch die folgende Formel (4) dargestelltes Monomer ist:
(CF₂=CF-)₂R³¹ (3)
wobei in der Formel (3) R³¹ eine zweiwertige C₁₋₁₀-Perfluorkohlenwasserstoffgruppe oder eine Gruppe mit einem etherischen Sauerstoffatom an einem Ende oder zwischen Kohlenstoff-Kohlenstoff-Bindungen der Perfluorkohlenwasserstoffgruppe darstellt;
(CH₂=CH-)₂R⁴¹ (4)
wobei in der Formel (4) R⁴¹ eine zweiwertige C₁₋₁₀-Perfluorkohlenwasserstoffgruppe oder eine Gruppe mit einem etherischen Sauerstoffatom an einem Ende oder zwischen Kohlenstoff-Kohlenstoff-Bindungen der Perfluorkohlenwasserstoffgruppe darstellt.

6. Fluoriertes Copolymer nach einem der Ansprüche 1 bis 5, wobei das Monomer mit einer Nitrilgruppe und einem Fluoratom ein durch die folgende Formel (5) dargestelltes Monomer ist:
CR⁵¹R⁵²=CR⁵³-R⁵⁴-CN (5)
wobei in der Formel (5) R⁵¹, R⁵² und R⁵³ jeweils unabhängig voneinander ein Wasserstoffatom, ein Fluoratom oder eine Methylgruppe darstellen und R⁵⁴ eine zweiwertige C₁₋₁₀-Perfluorkohlenwasserstoffgruppe oder eine Gruppe mit einem etherischen Sauerstoffatom an einem Ende oder zwischen Kohlenstoff-Kohlenstoff-Bindungen der Perfluorkohlenwasserstoffgruppe darstellt.

7. Fluoriertes Copolymer nach Anspruch 6, wobei R⁵¹, R⁵² und R⁵³ alle Fluoratome sind oder alle von ihnen Wasserstoffatome sind und wobei R⁵⁴ ein etherisches Sauerstoffatom aufweist und die Anzahl der etherischen Sauerstoffatome von 1 bis 3 beträgt.

8. Fluoriertes Copolymer nach einem der Ansprüche 1 bis 7, welches im Wesentlichen keine lodatome enthält, bestimmt gemäß den in der Beschreibung beschriebenen Verfahren.

9. Verfahren zur Herstellung eines fluorierten Copolymers, wie in einem der Ansprüche 1 bis 8 definiert, das das Copolymerisieren von Tetrafluorethylen, einem Perfluoralkylvinylether, einem Monomer mit einem Fluoratom und mindestens zwei polymerisierbaren ungesättigten Bindungen und einem Monomer mit einer Nitrilgruppe und einem Fluoratom in der Gegenwart eines Radikalpolymerisationsinitiators umfasst.

10. Verfahren zur Herstellung eines fluorierten Copolymers nach Anspruch 9, wobei die Copolymerisation in der Abwesenheit eines lodatome enthaltenden Kettenübertragungsmittels durchgeführt wird.

11. Fluorierte Copolymerzusammensetzung, umfassend ein fluoriertes Copolymer, wie in einem der Ansprüche 1 bis 8 definiert, und ein Vernetzungsmittel.

12. Fluorierte Copolymerzusammensetzung nach Anspruch 11, wobei das Vernetzungsmittel eine Verbindung mit mindestens zwei Aminogruppen ist.

13. Fluorierte Copolymerzusammensetzung nach Anspruch 11 oder 12, wobei der Gehalt des Vernetzungsmittels weniger als 1,0 Massenteile pro 100 Massenteile des fluorierten Copolymers beträgt.

14. Vernetzter Kautschukgegenstand mit dem in der fluorierten Copolymerzusammensetzung, wie in einem der Ansprüche 11 bis 13 definiert, vernetzten fluorierten Copolymer.

## Revendications

1. Copolymère fluoré ayant des unités basées sur du tétrafluoroéthylène, des unités basées sur un éther perfluoro(alkylvinylique), des unités basées sur un monomère ayant un atome de fluor et au moins deux liaisons insaturées polymérisables, et des unités basées sur un monomère ayant un groupe nitrile et un atome de fluor, dans lequel
lorsque le module de stockage dudit copolymère fluoré à une fréquence angulaire de 0,3 rad/s est G'_{0.3} et le module de stockage dudit copolymère fluoré à une fréquence angulaire de 0,03 rad/s est G'_{0.03}, tels que déterminés par mesure de viscoélasticité dynamique à 140 °C, G'_{0.3}/G'_{0.03} va de 1,00 à 1,43, et
la teneur en les unités basées sur un monomère ayant un atome de fluor et au moins deux liaisons insaturées polymérisables, déterminée tel que divulgué dans la description, va de 0,03 à 0,20 % en mol sur toutes les unités du copolymère fluoré.

2. Copolymère fluoré selon la revendication 1, dans lequel le rapport molaire de la teneur en les unités basées sur un monomère ayant un atome de fluor et au moins deux liaisons insaturées polymérisables sur la teneur en les unités basées sur un monomère ayant un groupe nitrile et un atome de fluor va de 0,002 à 7, déterminées conformément aux procédés décrits dans la description.

3. Copolymère fluoré selon la revendication 1 ou 2, dans lequel ledit éther perfluoro(alkylvinylique) est un monomère représenté par la formule suivante (1) :
CF₂=CF-O-R^{f1} (1)
dans la formule (1), R^{f1} représente un groupe perfluoroalkyle en C₁₋₁₀.

4. Copolymère fluoré selon l'une quelconque des revendications 1 à 3, dans lequel le monomère ayant un atome de fluor et au moins deux liaisons insaturées polymérisables est un monomère représenté par la formule suivante (2) :
(CR²¹R²²=CR²³-)ₐ₁R²⁴ (2)
dans la formule (2), R²¹, R²² et R²³ représentent chacun indépendamment un atome d'hydrogène, un atome de fluor, un groupe méthyle ou un groupe trifluorométhyle, a1 représente un entier allant de 2 à 6, et R²⁴ représente un groupe perfluorohydrocarbure en C₁₋₁₀ a1-valent ou un groupe ayant un atome d'oxygène éthérique à une terminaison ou entre des liaisons carbone-carbone du groupe perfluorohydrocarbure, et la pluralité de R²¹, la pluralité de R²² et la pluralité de R²³ peuvent, respectivement, être identiques ou différentes l'une de l'autre.

5. Copolymère fluoré selon la revendication 4, dans lequel le monomère représenté par la formule (2) est un monomère représenté par la formule suivante (3) ou un monomère représenté par la formule suivante (4) :
(CF₂=CF-)₂R³¹ (3)
dans la formule (3), R³¹ représente un groupe perfluorohydrocarbure en C₁₋₁₀ divalent ou un groupe ayant un atome d'oxygène éthérique à une terminaison ou entre des liaisons carbone-carbone du groupe perfluorohydrocarbure ;
(CH₂=CH-)₂R⁴¹ (4)
dans la formule (4), R⁴¹ représente un groupe perfluorohydrocarbure en C₁₋₁₀ divalent ou un groupe ayant un atome d'oxygène éthérique à une terminaison ou entre des liaisons carbone-carbone du groupe perfluorohydrocarbure.

6. Copolymère fluoré selon l'une quelconque des revendications 1 à 5, dans lequel le monomère ayant un groupe nitrile et un atome de fluor est un monomère représenté par la formule suivante (5) :
CR⁵¹R⁵²=CR⁵³-R⁵⁴-CN (5)
dans la formule (5), R⁵¹, R⁵² et R⁵³ représentent chacun indépendamment un atome d'hydrogène, un atome de fluor ou un groupe méthyle, et R⁵⁴ représente un groupe perfluorohydrocarbure en C₁₋₁₀ divalent ou un groupe ayant un atome d'oxygène éthérique à une terminaison ou entre des liaisons carbone-carbone du groupe perfluorohydrocarbure.

7. Copolymère fluoré selon la revendication 6, dans lequel l'ensemble desdits R⁵¹, R⁵² et R⁵³ sont des atomes de fluor ou ils sont tous des atomes d'hydrogène, et dans lequel R⁵⁴ a un atome d'oxygène éthérique et le nombre d'atomes d'oxygène éthériques va de 1 à 3.

8. Copolymère fluoré selon l'une quelconque des revendications 1 à 7, qui ne contient essentiellement pas d'atomes d'iode, déterminé conformément aux procédés décrits dans la description.

9. Procédé de production d'un copolymère fluoré tel que défini dans l'une quelconque des revendications 1 à 8, qui comprend copolymériser du tétrafluoroéthylène, un éther perfluoro(alkylvinylique), un monomère ayant un atome de fluor et au moins deux liaisons insaturées polymérisables, et un monomère ayant un groupe nitrile et un atome de fluor en présence d'un initiateur de polymérisation radicalaire.

10. Procédé de production d'un copolymère fluoré selon la revendication 9, dans lequel la copolymérisation est réalisée en l'absence d'un agent de transfert de chaîne contenant des atomes d'iode.

11. Composition de copolymère fluoré comprenant un copolymère fluoré tel que défini dans l'une quelconque des revendications 1 à 8 et un agent de réticulation.

12. Composition de copolymère fluoré selon la revendication 11, dans laquelle l'agent de réticulation est un composé ayant au moins deux groupes amino.

13. Composition de copolymère fluoré selon la revendication 11 ou 12, dans laquelle la teneur en l'agent de réticulation est inférieure à 1,0 partie en masse sur 100 parties en masse du copolymère fluoré.

14. Article en caoutchouc réticulé, ayant le copolymère fluoré réticulé dans la composition de copolymère fluoré telle que définie dans l'une quelconque des revendications 11 à 13.
